# EUROPEAN PATENT SPECIFICATION

(11) **EP 4 202 379 B1**
(45) Date of publication and mention of the grant of the patent: **24.09.2025**
(21) Application number: 21216363.8
(22) Date of filing: 21.12.2021
(51) Int. Cl.: G01F 1/66, G01F 1/667, G01F 15/00

(54) **ULTRASONIC TRANSDUCER ASSEMBLY**
ULTRASCHALLWANDLERANORDNUNG
ENSEMBLE TRANSDUCTEUR À ULTRASONS

(43) Date of publication of application: 28.06.2023
(73) Proprietor: Kamstrup A/S, 8660 Skanderborg (DK)
(72) Inventor: Pauli, Bjarke Brogaard, 8660 Skanderborg (DK); Rømer, Daniel Beck, 8660 Skanderborg (DK)
(74) Representative: Plougmann Vingtoft a/s

(56) References cited:
- CN-U- 213 209 155
- US-A- 3 771 117
- US-A- 3 935 484
- US-A- 4 417 480
- US-A1- 2021 003 434

## Description

### FIELD OF THE INVENTION

The present invention relates to an ultrasonic transducer assembly for use in a flow tube in an ultrasonic flow meter, with the ultrasonic transducer assembly mounted in the flow tube.

### BACKGROUND OF THE INVENTION

Ultrasonic transducers are used in ultrasonic flow meters to transmit ultrasonic waves into a flow tube and receive the ultrasonic waves that has travelled through the fluid flowing in the flow tube. By analysing the differences, typically a phase shift, between the transmitted and received ultrasonic signal, the flow inside the flow tube can be determined.

An ultrasonic transducer comprises a piezo element and is usually arranged in an ultrasonic transducer assembly. The ultrasonic transducer assembly is intended for being mounted in the wall of a flow tube either via a transducer holder or directly via an opening in the wall of the flow tube, so that the ultrasonic transducer assembly is in contact with the fluid in the flow tube. The ultrasonic transducer assembly is connected with electrical connections to a flow meter controller. The flow meter controller is controlling the transmission of ultrasonic signals from the transducer assembly and is analysing the ultrasonic signals received by the transducer assembly.

Transducer housings for ultrasonic transducer assemblies have traditionally been manufactured by steel, but to reduce costs, the incentive is to use low cost materials, like polymeric materials. The disadvantage of using polymeric materials for transducer housings is that fluids may penetrate through the polymeric materials into the interior of the transducer housing, which may damage the piezo element and the electric connections in the transducer housing. In addition, through the lid and seals, moisture may penetrate to the interior of the transducer housings, when placed in a humid environment. US3771117-A, US4417480-A and US3935484-A disclose ultrasonic transducer comprising transducer housings with insert parts and a spring element between them. US2021/003434-A1 discloses a flow meter with two transducer assemblies inside an enclosure, wherein the enclosure comprises a desiccant.

Hence, an improved ultrasonic transducer assembly would be advantageous, and in particular, a more efficient and/or reliable ultrasonic transducer assembly where fluids cannot damage the piezo element and the electric connections in the transducer housing would be advantageous.

### OBJECT OF THE INVENTION

The object of the invention is to prevent damage of components in the transducer housing from fluid penetrating from the fluid in the flow tube into the transducer housing or from moisture condensated on the transducer housing.

In particular, it may be seen as an object of the present invention to provide an ultrasonic transducer assembly that solves the above mentioned problems of the prior art with fluid penetrating into the transducer housing, and at the same time has a simple design which is well suited for lean manufacturing.

### SUMMARY OF THE INVENTION

Thus, the above described object and several other objects are intended to be obtained in a first aspect of the invention by providing an ultrasonic transducer assembly for being mounted in a wall opening of a flow tube, the ultrasonic transducer assembly comprising a transducer housing, a piezo element and an insert placed in a cavity of the transducer housing, wherein the insert comprises a main insert part, a spring element and a bottom insert part, the spring element is located between the main insert part and the bottom insert part, a desiccant is placed in the cavity to absorb fluid entering the cavity, and the main insert part or the bottom insert part comprises a compartment for holding the desiccant.

The inventive design brings several advantages. First of all the desiccant enables a prolonged operational use of ultrasonic transducer assemblies in flow meters. The addition of a desiccant will extend the lifetime of a transducer with years. Second, the manufacture of ultrasonic transducer assemblies with a desiccant is improved because a transducer can be assembled faster by including a spring and snap function, and because the desiccant can be inserted into the transducer housing just after being separately heat dried while placed in the insert and just before closing the transducer housing.

The invention is particularly, but not exclusively, advantageous for obtaining a low cost transducer assembly for mounting in a wall opening in a flow tube, the wall opening may contain a transducer holder. A transducer holder is a structure specially adapted to receive and hold a transducer. However, a wall opening may just be a hole, which is not specially adapted for a transducer. The transducer assembly has the advantage of being able to absorb fluids entering the cavity of the transducer housing.

The ultrasonic transducer assembly are arranged for transmitting and receiving ultrasonic signals. In the preferred embodiment the ultrasonic signals are transmitted from an ultrasonic transducer assembly to an opposite placed ultrasonic transducer assembly in the flow tube. Alternatively, the ultrasonic signal may be reflected and measured by the same ultrasonic transducer assembly that transmitted it.

The ultrasonic transducer assembly is mounted in a wall opening in a flow tube, usually aided by a transducer holder; the transducer holder supports a throughgoing opening in the wall in the flow tube. Thereby, part of the transducer assembly is in contact with fluid flowing in the flow tube and another part of the transducer assembly is placed outside the flow tube to be connectable to a flow tube controller.

The flow tube is part of a flow meter, and during operation, a fluid is flowing through the flow tube. The amount and speed of fluid passing through the flow tube is determined by the transducer assembly sending an ultrasonic acoustic signal through the fluid to an oppositely placed transducer assembly, which receives the ultrasonic signal and sends it to a flow meter controller. The flow tube may comprise two or four transducer assemblies; each transducer assembly is sending and receiving signals to and from the oppositely placed transducer assembly. The flowmeter controller is controlling the transducer assembly to send out the ultrasonic signals and to receive the ultrasonic signals from the transducer assembly, and is analysing ultrasonic signals to determine the flow in the flow tube.

Part of the transducer assembly during operation are in contact with the fluid passing through the flow tube, and thereby fluid may penetrate the transducer housing and enter the cavity in the transducer housing, which may damage the elements inside the cavity. Therefore the desiccant is placed in the cavity to absorb fluid entering the cavity. In addition, moisture may penetrate through the lid and seals to the cavity of the transducer housings.

The desiccant may be any kind of material, which can absorb fluids, for instance moisture. The desiccant may be a pellet, and it may be of bentonite clay.

To ease assembling the ultrasonic transducer assembly, the desiccant is placed in a box or a compartment. The compartment may be in a simple box which, when filled with desiccant, is placed in the cavity of the transducer housing.

However, the compartment may also be part of a piece, i.e. an insert, with further functionalities than holding the desiccant. The desiccant may be pellets, and therefore, it is preferable to place the desiccant in a box or a compartment to keep the desiccant in place, so it is easy to handle and it is not spilled during assembling the transducer assembly.

The insert may comprise a main insert part, a bottom insert part and a spring element between the two parts. The spring element allows the insert to be squeezed together, so that when mounted in the transducer housing the insert is exerting a pressure to the parts above and below the insert.

According to an embodiment, the ultrasonic transducer assembly further comprises a top plate; the insert is located between the piezo element and the top plate, and the spring element forcing the bottom insert part against the piezo element and the main insert part in a direction towards the top plate.

The insert is exerting a pressure on the piezo element due to the spring force, and thereby pressing the piezo element against an acoustic window in the transducer housing. Thereby, an optimal contact between the piezo element and the acoustic window is achieved. The acoustic window is a part of the transducer housing. Through the acoustic window the ultrasonic acoustic signal is passing when the piezo element is either creating a ultrasonic signal to be transmitted through the fluid in the flow tube to a piezo element in the opposite placed transducer assembly, or is receiving an ultrasonic acoustic signal from the piezo element in the opposite placed transducer assembly. The insert pressing the piezo element against the acoustic window ensures a good acoustic contact between the piezo element and the acoustic window.

According to an embodiment, the insert comprises an extension, which after the insert is mounted in the transducer housing, by the spring element is forced against protrusions in the transducer housing hereby fixing the insert in the transducer housing.

The extension is together with the protrusion and the spring element forming a snap function, so that when the insert is pushed into the cavity of the transducer housing, the insert is compressed and when released the extensions by the spring element is in a axial movement forced against the protrusions, so that the insert is locked against the protrusions. Axial movement of the insert relatively to the transducer housing is now prevented. Thereby the insert is fixed in the cavity of the transducer housing, cannot fall out during assembly, and cannot be removed. The snap function has the further advantage that it is faster and cheaper in manufacturing than using screws for arresting the insert.

According to an embodiment, the insert comprises contact pins for electrical contact with the piezo element.

The ultrasonic acoustic signal transmitted by the piezo element is received by the piezo element from a flowmeter controller through contacts pins, which are in electrical contact with the piezo element. Preferably, the contact pins are extending in the axial length of the insert and/or the transducer housing.

In an embodiment, the contact pins are extended by the use of electrical connectors, preferably also pins, extending through the top plate into the outside world.

According to an embodiment, the ultrasonic transducer assembly establishes electrical contact between the contact pins and the piezo element, when the insert is in a compressed state.

When the spring is unloaded the insert is in a released state. When the spring is loaded the insert is in a compressed state. In the released state the contact pins are embedded in the insert, i.e. they are not protruding beyond the end faces of the insert. This feature protects the contact pins from damage during manufacturing. Only when the insert is placed in the ultrasonic transducer housing and the insert is brought into its compressed state will the contact pins protrude beyond the end face of the insert and make electrical contact to the piezo element.

According to an embodiment, the insert comprises lead-through channels separated from the compartment and containing the contact pins.

The contact pins are in contact with connectors, which again are passing through connection passages in the top-plate and a lid of the insert and are in contact with the flowmeter controller. Lead-through channels are made in the insert, both in the main insert part and the bottom insert part for the contact pins to connect from the piezo element, the connectors and the outside of the top plate. Thereby, electrical ultrasonic signals can be transmitted between the flow meter controller and the piezo element to activate the piezo element to send out an ultrasonic signal or register ultrasonic vibrations in the piezo element from an incoming ultrasonic signal. Advantageously the lead through channels are separated from the cavity containing the desiccant. This separation, achieved with a dividing wall between the cavity and a lead through channel, avoids that wet desiccant pellets touch contact pins and cause short circuits.

In an embodiment the main insert part has a finger extending into the bottom insert part through an opening in the bottom insert part, said finger having means for preventing retraction of said finger through said opening.

The insert comprises the main insert part and the bottom insert part and these two parts are initially discrete and separated parts. By integrating a stem which is finger-like into the main insert part and then letting the finger protrude into the bottom insert part through an opening, the two insert parts can be connected mechanically by integrating a retraction prevention means, such as a nose or fingertip, into the finger. In this way the main insert part cannot be pulled out or away from the bottom insert part. Preferably the opening allows an axial movement back and forth of the finger. The finger and the opening are placed in the middle of the helical spring.

According to an embodiment, the insert at least partly is manufactured of a polymeric material.

The insert may be manufactured of the same material, polyphenylene sulphide, as the transducer housing, but it may also be manufactured of another plastic or polymeric materiel, as long as the fluid, which has entered the cavity in the transducer housing, can penetrate the material.

Preferable, a material may be chosen for the insert that is easier to penetrate for the fluid than the material of the transducer housing to increase the rate of which the fluid enters the compartment, which is holding the desiccant. However, moisture can also enter the insert at the lid, because the lid do not seal perfectly against the compartment, therefore also materials that is not penetrable for fluids may be used for the insert.

According to an embodiment, the transducer housing comprises an acoustic window and the piezo element is pressed by the bottom insert part against the acoustic window.

The piezo element may be glued to the acoustic window by a glue disc. The glue disc is placed between the piezo element and the acoustic window and by exerting a pressure to the glue, for instance by pressuring the piezo element against the glue disc; the glue in the glue disc is released and is gluing the piezo element to the acoustic window.

According to an embodiment, the transducer housing is manufactured, at least partly, of polyphenylene sulphide.

To keep the transducer assembly low cost, the transducer housing is made of a plastic or polymeric material, preferably of polyphenylene sulphide (PPS) due to its low permeability. Compared to using steel, using polymeric material such as polyphenylene sulphide is low-cost. The disadvantage is that polymeric materials such as polyphenylene sulphide are penetrable for the fluids in the flow tube, although at a very low rate. This disadvantage is mitigated by having a desiccant in the cavity of the transducer housing to absorb the fluid. Preferably, the transducer housing is a seamless one-piece housing, which housing is manufactured in a casting or injection moulding process. The casting step or injection-moulding step of the transducer housing is done in one manufacturing step.

A second aspect relates to an ultrasonic flowmeter comprising a flow tube and the ultrasonic transducer assembly according to claim 1.

In a third aspect, a method is described which method provides an ultrasonic transducer assembly for being mounted in a wall opening in a flow tube, the method comprising the following steps:
- providing a transducer housing, the transducer housing comprising a cavity,
- placing a desiccant for absorption of fluids in the cavity of the transducer housing.

The step of placing a desiccant for absorption of fluids in the cavity of the transducer housing may further comprise the steps of placing the desiccant in a box or in a compartment in an insert and placing the box or the insert in the cavity of the transducer housing.

The method of the third aspect may further comprise one or more of the following steps:
- placing an piezo element in the cavity in acoustic contact with an acoustic window in the transducer housing,
- placing an insert in contact with the piezo element,
- closing the cavity with a lid, the lid is in contact with the insert.

The insert comprises a main insert part, a bottom insert part and a spring element. The spring element is placed between the main insert part and the bottom insert. When the insert is placed in the cavity and the cavity is closed, by the spring force the insert is applying pressure to the piezo element. The bottom insert part is pressing the piezo element against the acoustic window hereby optimizing the acoustic contact between the piezo element and the acoustic window.

These and other aspects of the invention will be apparent from and elucidated with reference to the embodiments described hereinafter.

### BRIEF DESCRIPTION OF THE FIGURES

The ultrasonic transducer assembly according to the invention will now be described in more detail with regard to the accompanying figures. The figures show one way of implementing the present invention and is not to be construed as being limiting to other possible embodiments falling within the scope of the attached claim set.
Fig. 1 shows a cross section of an ultrasonic transducer assembly according to the invention.
Fig. 2 shows a cross section along the line A-A of the ultrasonic transducer assembly in fig. 1.
Fig. 3 shows an exploded view of the inventive ultrasonic transducer assembly.
Fig. 4 shows an exploded view of an insert.
Fig. 5 shows the assembled ultrasonic transducer assembly according to the invention.
Fig. 6 shows a flow meter comprising a flow tube with wall openings and transducer holders for mounting the ultrasonic transducer assembly.

### DETAILED DESCRIPTION OF AN EMBODIMENT

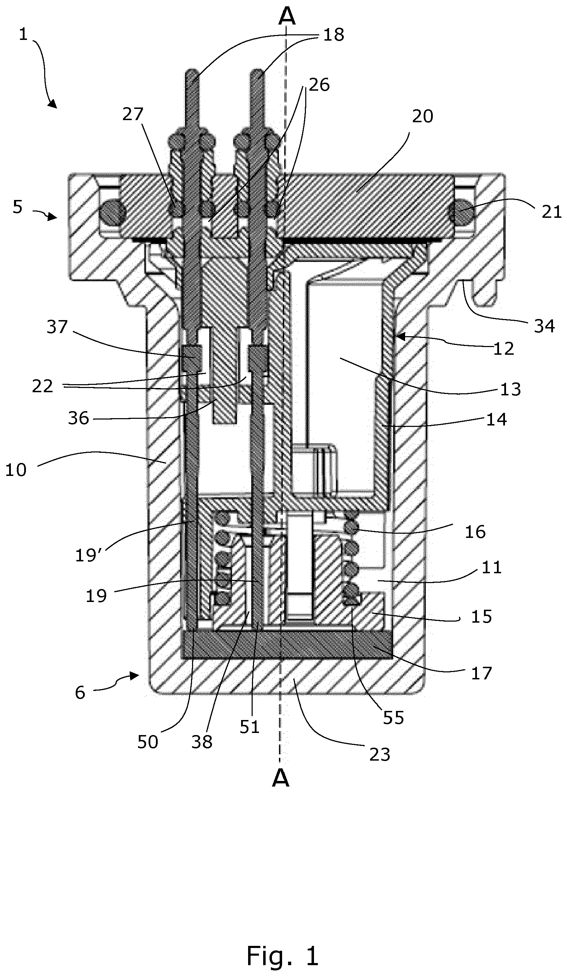

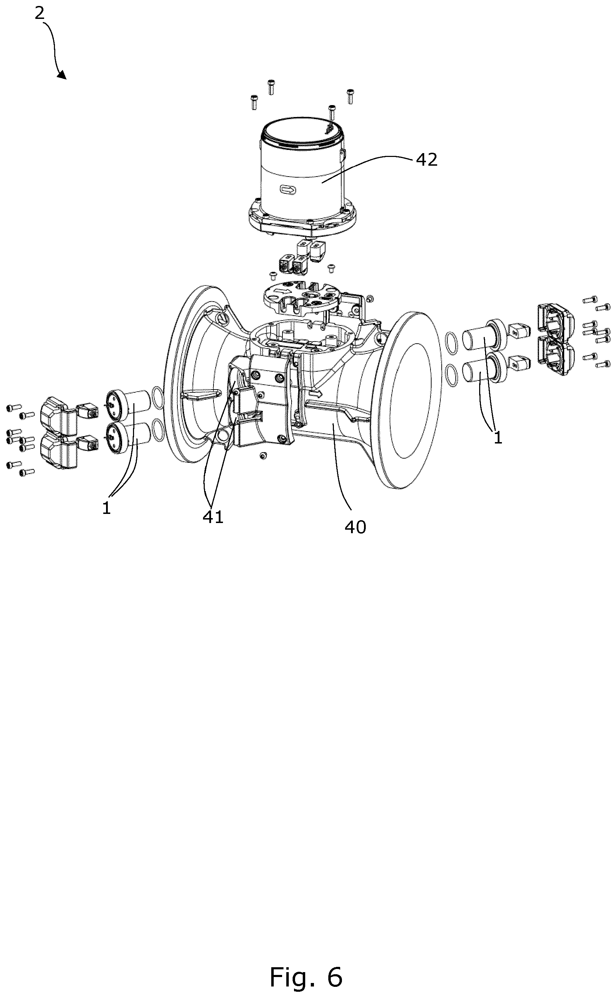

Fig. 1 shows a cross section of an ultrasonic transducer assembly 1 for being mounted in a wall opening 41 in a flow tube 40; the wall opening may be a transducer holder in an ultrasonic flow meter. The ultrasonic transducer assembly comprises a transducer housing 10. The transducer housing encircles a cavity 11, an open end 5 and a closed end 6. The cavity 11 can be accessed through the open end 5. The closed end 6 comprises an acoustic window 23. The transducer housing also comprises a mounting surface 34, which, when the transducer housing is mounted in the transducer holder 41 (see fig. 6), will rest against a mounting seat in the transducer holder.

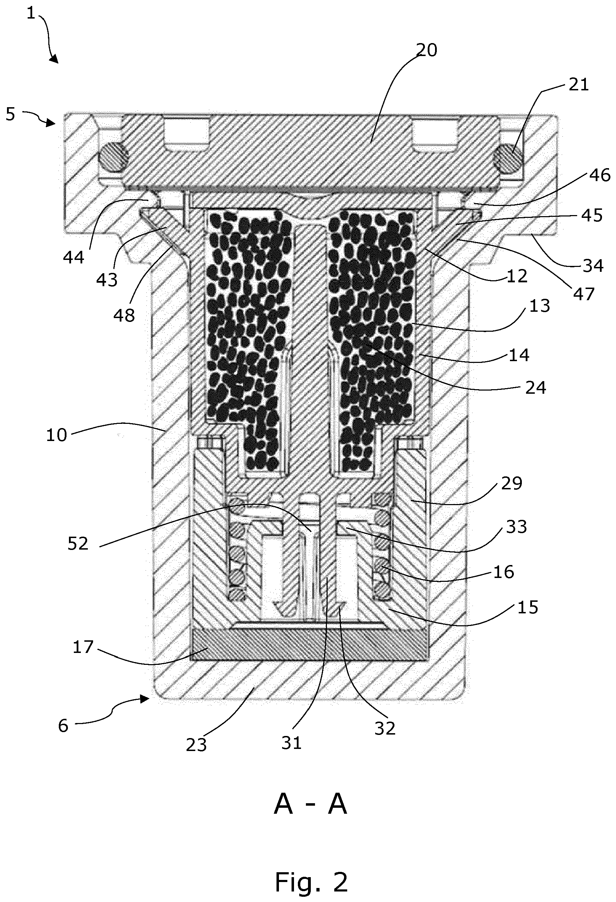

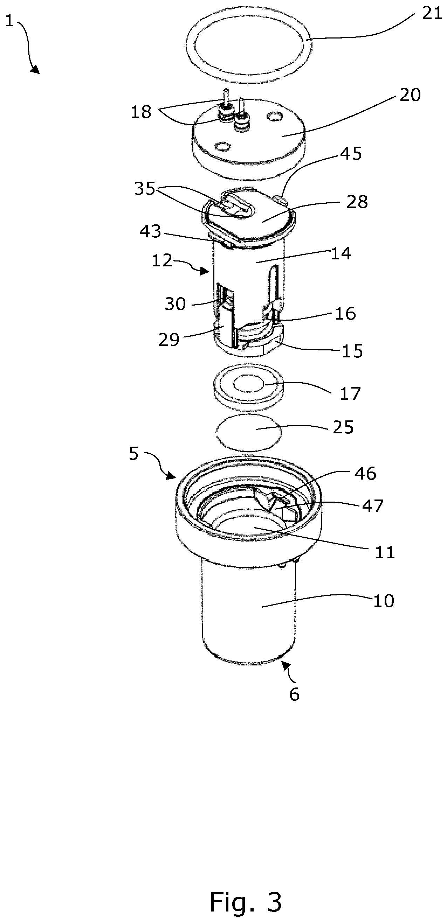

The cavity 11 is placed in the interior of the transducer housing 10. Through the open end 5, there is access from outside to the cavity. A top plate 20, usually made of glass, closes this open end. An O-ring 21 ensures a tight closure between the top plate 20 and the transducer housing 10. In the cavity 11 is placed a piezo element 17 (i.e. a piezo ceramic transducer) in contact with the acoustic window 23. The piezo element 17 may be glued to the acoustic window 23 by a glue disc 25 (fig. 3). An insert 12 is placed inside the cavity 11 on top of and in contact with the piezo element 17. The insert comprises a main insert part 14, a bottom inside part 15 and a helical spring element 16. The main insert part 14 comprises a compartment 13 for holding the desiccant 24 (fig. 2). The spring element 16 is placed between the main insert part 14 and the bottom insert part 15. With the insert 12 fully inserted and fixated relatively to transducer housing 10 the spring element is pressed together, so it exerts a spring force on the main insert part 14, and on the bottom insert part 15, towards the piezo element 17, pressing the piezo element 17 against the acoustic window 23.

Further, the insert 12 comprises metallic contact pins 19 and 19' for creating electrical contact between the piezo element 17 and the connectors 18 for registering ultrasonic vibrations of the piezo element or for initiating ultrasonic vibrations of the piezo element, receiving or transmitting an ultrasonic signal. The top plate 20 has two connection passages 26 for entering connectors 18 into the transducer housing 10. In addition, the connection passages are sealed tight with O-rings 27. The insert 12 comprises lead-trough channels 22 and 38, through which the connectors 18 are electrically connected to the contact pins 19 and 19' and the piezo element 17, so that the ultrasonic signal from or to the piezo element is led from or to a flow meter controller outside the transducer assembly. In the electro-mechanical contact point 37, a connector 18 is connected to the pins 19 and 19', whereby the electrical contact is established. This contact is established during manufacture when top plate 20 as a sub-assembly bearing connectors 18 and O-rings 27 is placed on top of the transducer housing 10, which already has the insert 12 inserted. Connectors 18 are then mechanically pressed against contact pins 19 and 19' at electro-mechanical contact point 37. Thus, in effect there is a rigid, i.e. stiff conductor from the top plate 20 to the piezo element 17. The electrical connection from the external end-points of the connectors 18 down to the electrodes on piezo element 17 are thus made via metallic pins extending in the axial direction of the transducer housing. In contact point 50, the pin 19' establishes contact to an electrical ground electrode of the piezo element and in contact point 51; the pin 19 makes contact to a signal electrode (electrodes not visible in figure 1).

The transducer assembly 1 is intended for being mounted in a transducer holder 41 for use in a flow tube 40 of an ultrasonic flow meter 2 (see fig. 6).

Fig. 2 shows a cross section along the line A-A of fig. 1 of the ultrasonic transducer assembly 1. This cross section is turned 90 degrees from the cross section in fig. 1. Fig. 2 shows many of the same elements as fig. 1, so all details explained for fig. 1 will not be repeated here. In fig. 2 a desiccant 24 is filled into the compartment 13 in the main insert part 14, so that when a fluid, typically water, penetrates the wall of the transducer housing 10 the fluid is also penetrating the wall of the insert 12 and enters the compartment 13. In the compartment 13 the fluid is absorbed by the desiccant 24.

The main insert part 14 comprises fingers 31 with fingertips 32. The fingertips 32, i.e. noses protruding sideways out from the longitudinal direction of the fingers, ensures that when the insert 12 has been assembled, the bottom insert part 15 and the main insert part 14 stays assembled. The fingertips 32 from the main insert part 14 will engage with a stop or shoulder 33 in the bottom insert part 15, when the main insert part and the bottom insert part are moved away from each other, preventing disassembly.

Fig. 3 shows an exploded view of the ultrasonic transducer assembly 1. The transducer housing 10 is shown with the cavity 11. When assembling the ultrasonic transducer assembly 1, first the glue disc 25 is placed in the closed end 6 of the transducer housing covering, at least partly, the acoustic window 23, and then the piezo element 17 is placed on top of the glue disc 25. A mechanical pressure may be applied to the piezo element when in contact with the glue disc, as a pressure force will release the glue from the glue disc and glue the piezo element 17 to the acoustic window 23. The glue disc may have a protecting film, which is removed before pressure may be applied.

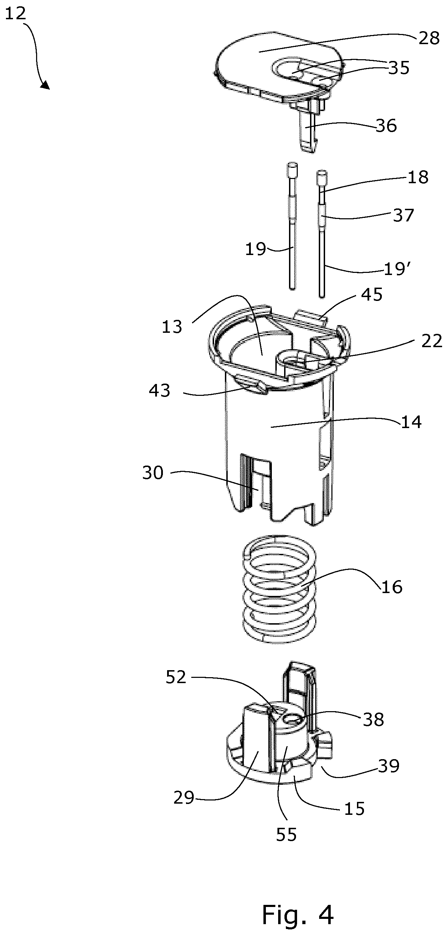

The insert 12 is inserted into the cavity 11 to be in contact with the piezo element 17. The assembly of the insert 12 is further described in the description of fig. 4. Then the top plate 20 is mounted in the transducer housing 10 together with an O-ring 21 sealing the passage between the top plate and the transducer housing, so fluid cannot pass the top-plate 20. The spring element 16 in the insert 12 is pressed together so the spring element is exerting a spring force. The spring force is pressuring the bottom insert part 15 against the piezo element 17, and thereby pressuring the piezo element down against the acoustic window 23 ensuring a good acoustic contact between the piezo element 17 and the acoustic window 23.

The insertion procedure of insert 12 will now be described in more detail. The cavity 11 of the transducer housing 10 has a diameter that is slightly larger than the diameter of the insert 12. The insert 12 is essentially cylindrical and thus fits into the cylindrical cavity 11. In order to ensure a sufficient backing force on piezo element 17 the insert 12 can be press fitted into the cavity and be fixated by the press fitting against the inner walls of the housing 10. This is one way to ensure a sufficient backing force. It is however preferred to use a snap fitting principle for generating the backing force. When inserting the insert 12 the lower surface of the bottom part 15 is made to rest against the piezo element 17. A further insertion step is then performed by mechanically pressing the main insert part 14 further in a direction towards the piezo element. The spring element 16 is compressed and extensions 43 and 45 placed at the upper edge of the insert 12 comes to rest in snap openings 47 and 48 respectively and snaps in under noses or protrusions 44 and 46. In this way the insert is fixedly mounted and the spring element 16 is compressed and exerting a force against the piezo element 17 and noses or protrusions 44 and 46.

The insert 12 thus has a released state as shown in fig. 3, in which the bottom insert part 15 with glides 29 has not been moved fully towards and into the main insert part 14, and a compressed state, as shown in fig. 1 and 2, where bottom insert part 15 with glides 29 has moved fully towards the main insert part and has loaded spring element 16. The distance of axial movement of the main insert part relative to the bottom insert part 15 is between 20% and 40% of the axial length of insert 12, when the insert is compressed.

Fig. 4 shows an exploded view of the insert 12. The insert 12 comprises the bottom insert part 15, the helical spring 16, the main insert part 14, and a lid 28. Further, the lead-through channel 22 is extending in axial direction leading pins 19 and 19' into the bottom insert part 15. Contact pins 19 and 19' are placed in the lead-through channel, so they will be in contact with the piezo element 17, when the insert is mounted in the transducer housing 10, and the contact pins 19 and 19' are connected to the connectors 18 with a telescope fixture in electro mechanical contact point 37, making it possible to fit the length of the contact pin and connector assembly as required. The main insert part 14 also comprises the compartment 13 for the desiccant 24. Access to the compartment is closed by fixing the lid 28 to the main insert part 14. The bottom insert part 15 comprises glides 29 fitting into receivers 30, ensuring that the bottom insert part 15 is fixed correctly to the main insert part 14 with the lead-trough channel 22 in the correct position.

Desiccant 24 is a commercially available drying agent preferably in the form of small pellets. Compartment 13 is filled with the desiccant in an amount of 4-6 grams. Preferably, the desiccant is first filled into compartment 13 and the insert is then closed with lid 28 and hook 36, and then the insert is mounted in the transducer housing. The lid 28 does not need to close tightly; its main function is to prevent the desiccant pellets in moving out of the insert 14. In an embodiment of the invention, the desiccant chamber could be placed at the bottom insert part 15 instead, for example by creating a cavity for the desiccant inside base 55.

The bottom insert part 15 has a lead-through channel 38 and a cut out 39. Their function is to allow pins 19 and 19' to pass through the bottom insert part 15 and to connect electrically to the piezo element. Thus, when the insert 12 is in its released state the pins 19 and 19' does not extend beyond the bottom part but when insert 12 is in its compressed state, i.e. inserted and snapped into the transducer housing 10, then the pins 19 and 19' extends slightly beyond the bottom part 15 and contacts the piezo element. As seen especially in fig. 1 and 3 pin 19 is surrounded by helical spring element 16, which rests on base 55, and the lead through channel 38 is made in base 55 of the bottom insert part 15 to allow the axial movement of pin 19 and hereby the electrical connection to the piezo element.

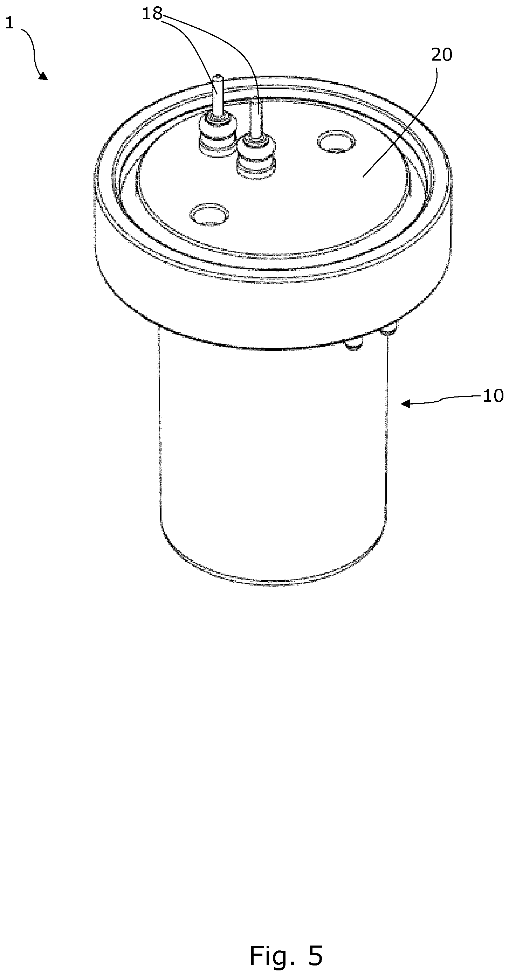

Fig. 5 shows the assembled ultrasonic transducer assembly 1 from the outside, with the transducer housing 10 and the top-plate 20 with connectors 18.

Fig. 6 shows an ultrasonic flow meter 2 comprising a flow tube 40 with wall openings 41, in the form of transducer holders, for mounting the ultrasonic transducer assembly 1. The transducer holders are in connection with a throughgoing hole in the wall in the flow tube 40. The transducer holders also comprise a transducer seat (not shown) adapted to fit to the mounting surface 34 of the transducer assembly 1. For this flow meter, four transducer assemblies 1 are used, creating two ultra sound tracks in the flow meter for measuring flow by ultrasonic acoustic signals passing between a transducer assembly and an oppositely placed transducer assembly. The flow meter controller 42 controls the transmission of ultrasonic signals from the piezo element in the transducer assembly 1. The received ultrasonic signals is transmitted from the receiving piezo element to the flow meter controller 42 by wires (not shown).

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention.

### Reference numbers in the figures:

### Cross line A-A in fig. 1

- 1: Ultrasonic transducer assembly
- 2: Ultrasonic Flow meter
- 5: Open end
- 6: Closed end
- 10: Transducer housing
- 11: Cavity
- 12: Insert
- 13: Compartment
- 14: Main insert part
- 15: Bottom insert part
- 16: Spring element
- 17: Piezo element
- 18: Connectors
- 19 and 19': Contact pins
- 20: Top plate
- 21: O-ring
- 22: Lead-through channels
- 23: Acoustic window
- 24: Desiccant
- 25: Glue disc
- 26: Connection passages
- 27: O-ring
- 28: Lid
- 29: Glides
- 30: Receiver
- 31: Fingers
- 32: Fingertips
- 33: Stop or shoulder
- 34: Mounting surface
- 35: Lid openings
- 36: Hook
- 37: Electro-mechanical contact point
- 38: Lead-through channel
- 39: Cut out
- 40: Flow tube
- 41: Wall opening or transducer holder
- 42: Flow meter controller
- 43: Extension
- 44: Nose or protrusion
- 45: Extension
- 46: Nose or protrusion
- 47: Snap opening
- 48: Snap opening
- 50: Contact point
- 51: Contact point
- 52: Opening
- 55: Base

## Claims

1. An ultrasonic transducer assembly for being mounted in a wall opening (41) of a flow tube (40), the ultrasonic transducer assembly comprising a transducer housing (10), a piezo element (17) and an insert (12) placed in a cavity (11) of the transducer housing, wherein the insert (12) comprises a main insert part (14), a spring element (16) and a bottom insert part (15), the spring element (16) is located between the main insert part (14) and the bottom insert part (15), **characterised in that** a desiccant is placed in the cavity to absorb fluid entering the cavity, and the main insert part (14) or the bottom insert part (15) comprises a compartment (13) for holding the desiccant (24).

2. The ultrasonic transducer assembly according to claim 1, wherein the ultrasonic transducer assembly (1) further comprises a top plate (20), the insert (12) is located between the piezo element (17) and the top plate (20), and the spring element (16) forcing the bottom insert part (15) against the piezo element (17) and the main insert part (15) in a direction towards the top plate (20).

3. The ultrasonic transducer assembly according to claim 1 or 2, wherein the insert comprises an extension (43, 45), which after the insert (12) is mounted in the transducer housing (10), by the spring element (16) is forced against protrusions (44, 46) in the transducer housing (10) hereby fixing the insert (12) in the transducer housing (10).

4. The ultrasonic transducer assembly according to any of the preceding claims, wherein the insert (12) comprises contact pins (19, 19') for electrical contact with the piezo element (17).

5. The ultrasonic transducer assembly according to claim 4, wherein electrical contact between the contact pins (19, 19') and the piezo element (17) is established when the insert (12) is in a compressed state.

6. The ultrasonic transducer assembly according to claim 4 or 5, wherein the insert (12) comprises lead through channels (22) separated from the compartment (13) and containing the contact pins (19, 19').

7. The ultrasonic transducer assembly according to any of the preceding claims wherein the main insert part (14) has a finger (31) extending into the bottom insert part (15) through an opening (52) in the bottom insert part, said finger (31) having means (32) for preventing retraction of said finger through said opening.

8. The ultrasonic transducer assembly according to any of the preceding claims, wherein the insert (12) at least partly is manufactured of a polymeric material.

9. The ultrasonic transducer assembly according to any of the preceding claims, wherein the transducer housing (10) comprises an acoustic window (23) and the piezo element (17) is pressed by the bottom insert part (15) against the acoustic window.

10. The ultrasonic transducer assembly according to any of the preceding claims, wherein the transducer housing (10) is manufactured, at least partly, of polyphenylene sulphide.

11. An ultrasonic flowmeter comprising a flow tube and an ultrasonic transducer assembly according to claim 1.

## Patentansprüche

1. Ultraschallwandleranordnung zum Montieren in einer Wandöffnung (41) eines Strömungsrohrs (40), wobei die Ultraschallwandleranordnung ein Wandlergehäuse (10), ein Piezoelement (17) und einen Einsatz (12) umfasst, der in einem Hohlraum (11) des Wandlergehäuses platziert ist, wobei der Einsatz (12) ein Haupteinsatzteil (14), ein Federelement (16) und ein unteres Einsatzteil (15) umfasst, wobei sich das Federelement (16) zwischen dem Haupteinsatzteil (14) und dem unteren Einsatzteil (15) befindet, **dadurch gekennzeichnet, dass** in dem Hohlraum ein Trockenmittel platziert ist, um in den Hohlraum eintretendes Fluid zu absorbieren, und das Haupteinsatzteil (14) oder das untere Einsatzteil (15) eine Kammer (13) zum Halten des Trockenmittels (24) umfasst.

2. Ultraschallwandleranordnung nach Anspruch 1, wobei die Ultraschallwandleranordnung (1) ferner eine obere Platte (20) umfasst, der Einsatz (12) zwischen dem Piezoelement (17) und der oberen Platte (20) angeordnet ist und das Federelement (16) das untere Einsatzteil (15) gegen das Piezoelement (17) und das Haupteinsatzteil (15) in einer Richtung hin zu der oberen Platte (20) drängt.

3. Ultraschallwandleranordnung nach Anspruch 1 oder 2, wobei der Einsatz einen Fortsatz (43, 45) umfasst, der, nachdem der Einsatz (12) in dem Wandlergehäuse (10) montiert ist, durch das Federelement (16) gegen Vorsprünge (44, 46) in dem Wandlergehäuse (10) gedrückt wird, wodurch der Einsatz (12) in dem Wandlergehäuse (10) fixiert wird.

4. Ultraschallwandleranordnung nach einem der vorhergehenden Ansprüche, wobei der Einsatz (12) Kontaktstifte (19, 19') für einen elektrischen Kontakt mit dem Piezoelement (17) umfasst.

5. Ultraschallwandleranordnung nach Anspruch 4, wobei elektrischer Kontakt zwischen den Kontaktstiften (19, 19') und dem Piezoelement (17) hergestellt wird, wenn sich der Einsatz (12) in einem komprimierten Zustand befindet.

6. Ultraschallwandleranordnung nach Anspruch 4 oder 5, wobei der Einsatz (12) Durchführungskanäle (22) umfasst, die von der Kammer (13) getrennt sind und die Kontaktstifte (19, 19') enthalten.

7. Ultraschallwandleranordnung nach einem der vorhergehenden Ansprüche, wobei das Haupteinsatzteil (14) einen Finger (31) aufweist, der sich in das untere Einsatzteil (15) durch eine Öffnung (52) in dem unteren Einsatzteil erstreckt, wobei der Finger (31) Mittel (32) zum Verhindern von Zurückziehen des Fingers durch die Öffnung aufweist.

8. Ultraschallwandleranordnung nach einem der vorhergehenden Ansprüche, wobei der Einsatz (12) mindestens teilweise aus einem Polymermaterial hergestellt ist.

9. Ultraschallwandleranordnung nach einem der vorhergehenden Ansprüche, wobei das Wandlergehäuse (10) ein Schallfenster (23) umfasst und das Piezoelement (17) durch das untere Einsatzteil (15) gegen das Schallfenster gedrückt wird.

10. Ultraschallwandleranordnung nach einem der vorhergehenden Ansprüche, wobei das Wandlergehäuse (10) mindestens teilweise aus Polyphenylensulfid hergestellt ist.

11. Ultraschalldurchflussmesser, umfassend ein Strömungsrohr und eine Ultraschallwandleranordnung nach Anspruch 1.

## Revendications

1. Ensemble transducteur à ultrasons destiné à être monté dans une ouverture de paroi (41) d'un tube d'écoulement (40), l'ensemble transducteur à ultrasons comprenant un boîtier de transducteur (10), un élément piézoélectrique (17) et un insert (12) placé dans une cavité (11) du boîtier de transducteur, dans lequel l'insert (12) comprend une partie d'insert principale (14), un élément ressort (16) et une partie d'insert inférieure (15), l'élément ressort (16) est situé entre la partie d'insert principale (14) et la partie d'insert inférieure (15), **caractérisé en ce qu'**un dessiccant est placé dans la cavité pour absorber un fluide entrant dans la cavité, et la partie d'insert principale (14) ou la partie d'insert inférieure (15) comprend un compartiment (13) pour maintenir le dessiccant (24).

2. Ensemble transducteur à ultrasons selon la revendication 1, dans lequel l'ensemble transducteur à ultrasons (1) comprend en outre une plaque supérieure (20), l'insert (12) est situé entre l'élément piézoélectrique (17) et la plaque supérieure (20), et l'élément ressort (16) pousse la partie d'insert inférieure (15) contre l'élément piézoélectrique (17) et la partie d'insert principale (15) dans une direction vers la plaque supérieure (20).

3. Ensemble transducteur à ultrasons selon l'une des revendications 1 ou 2, dans lequel l'insert comprend une extension (43, 45), qui, après le montage de l'insert (12) dans le boîtier de transducteur (10), est poussée par l'élément ressort (16) contre des saillies (44, 46) dans le boîtier de transducteur (10) fixant ainsi l'insert (12) dans le boîtier de transducteur (10).

4. Ensemble transducteur à ultrasons selon l'une quelconque des revendications précédentes, dans lequel l'insert (12) comprend des broches de contact (19, 19') pour un contact électrique avec l'élément piézoélectrique (17).

5. Ensemble transducteur à ultrasons selon la revendication 4, dans lequel un contact électrique entre les broches de contact (19, 19') et l'élément piézoélectrique (17) est établi lorsque l'insert (12) est dans un état comprimé.

6. Ensemble transducteur à ultrasons selon l'une des revendications 4 ou 5, dans lequel l'insert (12) comprend des canaux traversants (22) séparés du compartiment (13) et contenant les broches de contact (19, 19').

7. Ensemble transducteur à ultrasons selon l'une quelconque des revendications précédentes, dans lequel la partie d'insert principale (14) comporte un doigt (31) s'étendant dans la partie d'insert inférieure (15) à travers une ouverture (52) dans la partie d'insert inférieure, ledit doigt (31) comportant un moyen (32) permettant d'empêcher la rétraction dudit doigt à travers ladite ouverture.

8. Ensemble transducteur à ultrasons selon l'une quelconque des revendications précédentes, dans lequel l'insert (12) est au moins partiellement fabriqué à partir d'un matériau polymère.

9. Ensemble transducteur à ultrasons selon l'une quelconque des revendications précédentes, dans lequel le boîtier de transducteur (10) comprend une fenêtre acoustique (23) et l'élément piézoélectrique (17) est pressé par la partie d'insert inférieure (15) contre la fenêtre acoustique.

10. Ensemble transducteur à ultrasons selon l'une quelconque des revendications précédentes, dans lequel le boîtier de transducteur (10) est fabriqué, au moins en partie, en sulfure de polyphénylène.

11. Débitmètre à ultrasons comprenant un tube d'écoulement et un ensemble transducteur à ultrasons selon la revendication 1.
